# EUROPEAN PATENT APPLICATION

(11) **EP 2 744 172 A1**
(43) Date of publication of application: **18.06.2014**
(21) Application number: 12382503.6
(22) Date of filing: 14.12.2012
(51) Int. Cl.: H04L 29/08

(54) **Method, system and a diameter agent node to provide communication in a diameter based protocol**

(71) Applicant: Telefonica S.A., 28013 Madrid (ES)
(72) Inventor: Pablos Sánchez, Ronald, 28013 Madrid (ES)
(74) Representative: Gonzalez-Alberto Rodriguez, Natalia

(57) **Abstract**

The method, sending by a Diameter Client node a request message to a Diameter Server node through a Diameter Agent node implementing a policy enforcement on the request message and performing routing decisions on it. In embodiments of the invention the Diameter Agent node further progresses the request through a set of auxiliary Diameter Agent nodes acting as a Diameter Orchestration Agent node based on said implemented policy enforcement and on the context of said Diameter protocol and selects the number of auxiliary Diameter Agent nodes intervening in said progressing.

The system of the invention is adapted to implement the method of the invention.

The Diameter agent node is adapted to progress a request to a set of auxiliary Diameter Agents nodes, to select the number of auxiliary Diameter Agent nodes intervening in said progressing and to further send said requested message to a Diameter Server node.

## Description

### Field of the art

The present invention generally relates to telecommunications, and more particularly to a method and a system to provide communication in a Diameter based protocol.

The invention also relates to a Diameter Agent node adapted to progress a request to a set of auxiliary Diameter agents nodes and to further send the requested message to a Diameter Server node.

In the invention, the policy term encompasses any type of restrictions, privileges and treatments generally differentiated on users or groups of users. For instance, a user agreement may specify certain QoS policies to access a particular service, or restrictions according to the time of day, denied access to other services, etc.

The term context (of an object) it can be summarized as the dynamic information (not static) relative to that object. In the context of a network i.e. according to the state of the network at a particular time, it can be necessary to redirect traffic in different ways if there is a situation of congestion in a region or similar things. In the context of a user, even though if the user has the same contract, it would be possible to perform different treatments depending on if he/she comes by 3G or WiFi.

### Prior State of the Art

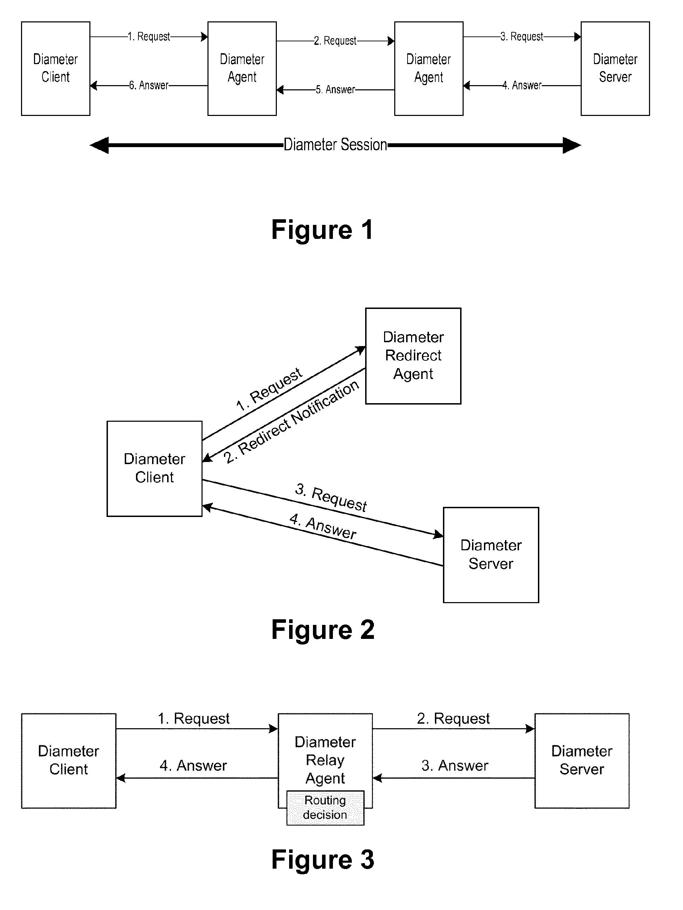

Internet Engineering Task Force (IETF) standardized Diameter Base Protocol in RFC 3588 as an Authentication, Authorization and Accounting (AAA) alternative to Remote Authentication Dial-In User Server (RADIUS). In this specification, a communication model, as can be seen in Figure 1, is presented where a Diameter client establishes a session with a Diameter server, going through optional intermediate Diameter nodes. These intermediate nodes are defined into the specification as Diameter Agents.

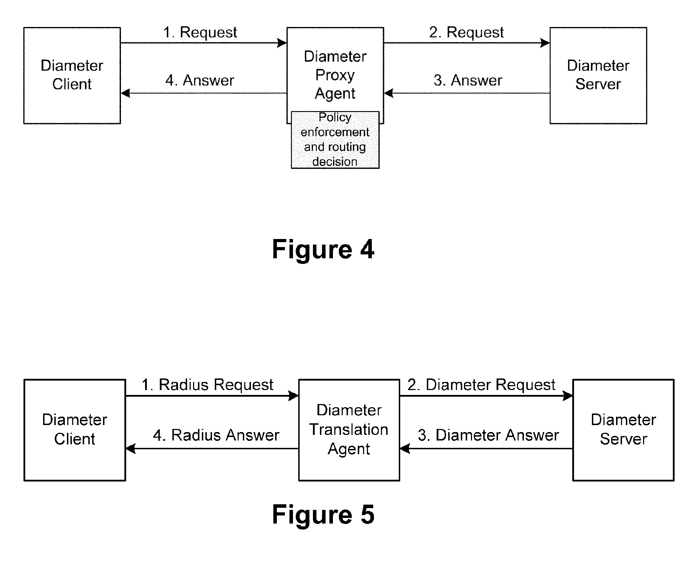

There are four types of Diameter agents defined:
- Redirect. Rather than forwarding requests and responses between clients and servers, redirect agents refer to servers or next agent to where redirect the requests. Redirect agents do not sit in the forwarding path and they do not alter any Attribute-Value Pairs (AVPs) transiting between client and server. Figure 2 shows an example of a Diameter Redirect Agent.
- Relay. Relay Agents forward requests and responses based on routing-related AVPs. Relays do not make policy decisions and they do not examine or alter non-routing AVPs. As a result, relays do not need to understand the semantics of messages or non-routing AVPs, and they do not keep any state on sessions in progress. Figure 3 shows an example of a Diameter Relay Agent.
- Proxy. In addition to forwarding requests and responses, proxies make policy decisions. As a result, proxies need to understand the semantics of the messages passing through them and can modify messages to implement the policy enforcement. It is the most versatile of Diameter agents. Figure 4 shows an example of a Diameter Proxy Agent.
- Translation. A translation agent is a stateful Diameter node that performs protocol translation between Diameter and another AAA protocol, such as RADIUS. Figure 5 shows an example of a Diameter Translation Agent.

For relay and proxy agents, Diameter Base Protocol defines a mechanism in order to detect loops when the diameter agents forward requests in such a way that when the agent receives a request already forwarded, it respond with an error result.

Nowadays Diameter is not only used for AAA purposes, but for all types of communications between core network nodes. It is widespread used in IMS and Long Term Evolution/ Service Architecture Evolution (LTE/SAE) architecture, so Diameter has been extended with many new AVPs and applications to face the complexity and functionality required by the new generation networks.

In this scenario, numerous network nodes communicate each other using Diameter and in many situations it is necessary to route Diameter signaling through multiples nodes that need to add value or simply sit on the signaling path to be aware of the Diameter sessions.

As explained before, there are four types of diameter agents standardized from which only two, Relay agent and Proxy agent, and are on the diameter signaling path. Translation agent is a protocol translation gateway and Redirect agent is not on the signaling path.

Since the Relay agent is very simple and is not aware of the semantic of the diameter session, the proxy agent is the only one which can really perform versatile decisions about where to progress the diameter signaling based on the semantic of the diameter session. Apart of that, there are situations where, depending on the context, it would be desirable that a proxy agent could decide that the diameter signaling have to go through a set of nodes or other. And these set of nodes are not aware each other, so cannot progress the diameter signaling to the next one. Diameter specification is not prepared for this situation, as the loop detection procedure prevents a proxy agent from acting as diameter broker.

### Summary of the Invention

The object of the present invention is to provide an extension of the diameter proxy agent by defining a new agent type, a diameter orchestration agent, which will enable the progress of the diameter signaling from an anchor point, depending on the context, through a set of diameter nodes or other, which are on the signaling path.

To that end, the present invention relates, in a first aspect, to a method to provide communication in a Diameter based protocol, wherein a Diameter Client node sends a request message to a Diameter Server node through at least one Diameter Agent node, said at least one Diameter Agent node implementing a policy enforcement on said request message and performing routing decisions on it.

On contrary to the known proposals, in the method of the first aspect the at least one Diameter Agent node upon receiving the request message progresses it through a set of auxiliary Diameter Agent nodes, acting as a Diameter Orchestration Agent node based on the implemented policy enforcement and on the context of the Diameter protocol and selecting the number of auxiliary Diameter Agent nodes intervening in said progressing, wherein said progress involves the request message passing from the Diameter Orchestration Agent node to each of the selected auxiliary Diameter Agent nodes by returning in each case to the Diameter Orchestration Agent before progressing it to another selected auxiliary Diameter Agent node and to be sent finally to said Diameter Server.

Each one of the selected auxiliary Diameter Agent nodes processes the progressed request message. When the Diameter Server node answers to the request message, the answer will be progress through the selected auxiliary Diameter Agent nodes in reverse order of the sending.

According to another embodiment, the selected auxiliary Diameter Agent nodes can add and/or modify Attribute-Value Pairs (AVPs) to the request message. Preferably, the Attribute-Value Pairs (AVPs) are added and/or modified taking into account information regarding said user.

According to yet another embodiment, a node or nodes of said selected auxiliary Diameter agent nodes can also remove the Attribute-Value Pairs (AVPs) from the request message taking into account information regarding said user.

A second aspect of the present invention, relates to a system to provide communication in a Diameter based communication, comprising a Diameter Client node, at least one Diameter Agent node and a Diameter Server node wherein the Diameter Client node is adapted to send a request message to the Diameter Server node through the at least one Diameter Agent node, said at least one Diameter Agent node being adapted to implement a policy enforcement on the request message and to perform routing decisions on it.

On contrary to the known proposals, in the system of the second aspect the at least one Diameter agent node is further adapted, upon receiving the request message, to progress it to a set of auxiliary Diameter Agent nodes acting as a Diameter Orchestration Agent node based on said implemented policy enforcement and on the context of said Diameter protocol and to select the number of auxiliary Diameter Agent nodes intervening in said progressing.

According to an embodiment, the set of auxiliary Diameter agent nodes are situated on the signaling path of the Diameter protocol.

The system of the second aspect is adapted to implement the method of the first aspect.

A third aspect of the present invention, relates to a Diameter Agent node adapted to progress a message requested by a Diameter client node, to a set of auxiliary Diameter agents nodes, acting as a Diameter Orchestration Agent node based on implemented policy enforcements and on the context of a Diameter protocol, to select the number of auxiliary Diameter Agent nodes intervening in said progressing and to further send the progressed requested message to a Diameter Server node, said progressed requested message being processed by the selected auxiliary Diameter Agent nodes taking into account policies and context of a Diameter protocol.

According to an embodiment, the Diameter agent node is situated in a Diameter protocol path between said Diameter Client node and said Diameter Server node.

### Brief Description of the Drawings

The previous and other advantages and features will be more fully understood from the following detailed description of embodiments, with reference to the attached, which must be considered in an illustrative and non-limiting manner, in which:
Figure 1 is an example of a Diameter communication model.
Figure 2 is an example of a Diameter Redirect Agent.
Figure 3 is an example of a Diameter Relay Agent.
Figure 4 is an example of a Diameter Proxy Agent.
Figure 5 is an example of a Diameter Translation Agent.
Figure 6 is an example of the proposed Diameter Orchestration Agent, according to an embodiment of the present invention.

### Detailed Description of Several Embodiments

Embodiments of the present invention proposes a Diameter Orchestration Agent, a new type of Diameter Agent, which improves the standard Diameter Proxy Agent, relaxing the routing loop detection and enabling Diameter brokering functions.

### Interaction model:

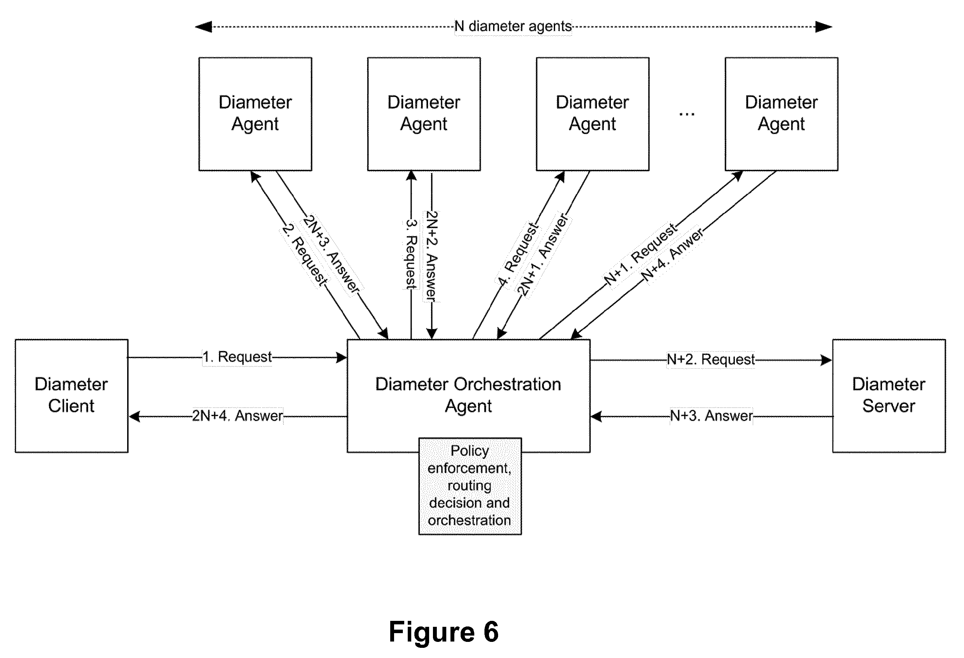

As stated in RFC 3588, a relay or proxy agent must check for forwarding loops when receiving requests. When a loop is detected the agent must answer an error result code. However, in the proposed invention, a Diameter Orchestration Agent is capable of handling a loop event without causing an error result. Instead, it progresses the diameter signalling to the next node enforcing the orchestration imposed by policies. Figure 6 shows an embodiment of the proposed Diameter Orchestration Agent. When the Diameter Orchestration Agent receives a Diameter request, it will progress the diameter request, depending on policies and the context, to a set of diameter agents that will further processing the request, in addition to sitting on the signalling path. When finally the answer comes from Diameter server, the answer will be progressed through the set of agents in reverse order.

### Messages and attributes:

When forwarding a diameter request, RFC 3588 states that a relay or proxy agent must append a Route-Record AVP to all requests forwarded. The AVP contains the identity of the peer the request was received from. A loop is detected if the agent finds its own identity in a Route-Record AVP. When such an event occurs, the agent must answer with the Result-Code AVP set to DIAMETER_LOOP_DETECTED.

Record-Route AVP (AVP code 282), defined in RFC 3588, is of type Diameterldentity and contains the diameter agent identity.

Result-Code AVP (AVP code 268), defined in RFC 3588, is of type Enumerated and contains the answer result code.

For the purpose of this invention, when a loop event occurs, it is proposed not to send an answer with Result-Code set to DIAMETER_LOOP_DETECTED, in case of request receiver is a Diameter Orchestration Agent and the request comes from a valid peer, that is, it is coherent with the Diameter Orchestration Agent operation.

Instead of sending an answer with the result code indicating a loop is detected, the Diameter Orchestration Agent will progress the request to the following node in set of nodes that must be on the signaling path.

As mentioned before and seen in Figure 6, when finally the answer comes from Diameter server, the answer will be progress through the set of agents in reverse order.

Some services, for instance value added services, to be provided require some type of customization to be taken into account by the diameter servers. With a Diameter Orchestration Agent in the middle of a diameter path, this agent can consult internally or externally policies that indicates the set of agents that the diameter signalling must pass through. These set of agents will add or modify AVPs from diameter messages, which will impact on the diameter server processing, and this way will be a customization on the result obtained by the user. For example, an agent could add AVPs regarding user location, or an AVP indicating a premium user.

On the other hand, for filtering information the present invention can use an orchestrated agent not to add value, but to limit the user service by removing information from the diameter messages, that is, removing AVPs, so the diameter server cannot take into account this removed information.

A Diameter Orchestration Agent is needed because the filtering can depend on the concrete user, so in some cases must be filtered and in other cases not. Therefore, the Orchestration Agent will progress the diameter signalling through the filtering agent in some cases and will not progress in other cases.

Some of the main advantages achieved with the present invention are:
As the telecommunication networks are getting more and more complex to cope with the near future services, the orchestration model involves a very simple and flexible capacity to adapt rapidly the network to the challenging new services.

The invention will reduce the time-to-market and will extend easily the portfolio of new services, since the invention facilitates new service scenarios which will be difficult to carry out otherwise.

It will provide some easy and low cost mechanisms to enhance the flexibility of dynamic control of services, since it is an extension of a commonly adopted Diameter Proxy Agent, and will also provide easy dissemination of the information available in different points of the operator network since the orchestrated agents are aware of the information passing through them.

Finally, the invention will provide easy customization on the service provided to the user, as the orchestration can be customized per user.

The foregoing describes embodiments of the present invention and modifications, obvious to those skilled in the art can be made thereto, without departing from the scope of the present invention.

## Claims

1. A method to provide communication in a Diameter based protocol, wherein a Diameter Client node sends a request message to a Diameter Server node through at least one Diameter Agent node, said at least one Diameter Agent node implementing a policy enforcement on said request message and performing routing decisions on it, the method being **characterized in that** said at least one Diameter Agent upon receiving said request message progresses it through a set of auxiliary Diameter Agent nodes acting as a Diameter Orchestration Agent node based on said implemented policy enforcement and on the context of said Diameter protocol and selecting the number of auxiliary Diameter Agent nodes intervening in said progressing, wherein said progress involves the request message passing from the Diameter Orchestration Agent node to each of the selected auxiliary Diameter Agent nodes by returning in each case to the Diameter Orchestration Agent before progressing it to another selected auxiliary Diameter Agent node and to be sent finally to said Diameter Server.

2. A method according to claim 1, **characterized in that** each of the selected auxiliary Diameter Agent nodes processes said request message.

3. A method according to claim 1, **characterized in that** said Diameter Server node progresses an answer of said request message through said selected auxiliary Diameter Agent nodes in reverse order of said sending.

4. A method according to claim 1, **characterized in that** said selected auxiliary Diameter Agent nodes add and/or modify Attribute-Value Pairs (AVPs) to said request message.

5. A method according to claim 4, **characterized in that** said Attribute-Value Pairs (AVPs) are added and/or modified taking into account information regarding said user.

6. A method according to claim 1, **characterized in that** a node or nodes of said selected auxiliary Diameter Agent nodes further comprises removing Attribute-Value Pairs (AVPs) from said request message taking into account information regarding said user.

7. A system to provide communication in a Diameter based protocol, comprising a Diameter Client node, at least one Diameter Agent node and a Diameter Server node wherein said Diameter Client node is adapted to send a request message to said Diameter Server node through said at least one Diameter Agent node, said at least one Diameter Agent node being adapted to implement a policy enforcement on said request message and to perform routing decisions on it, the system **characterized in that** said at least one Diameter Agent node is further adapted, upon receiving said request message, to progress it to a set of auxiliary Diameter Agent nodes acting as a Diameter Orchestration Agent node based on said implemented policy enforcement and on the context of said Diameter protocol and to select the number of auxiliary Diameter Agent nodes intervening in said progressing.

8. A system according to claim 7, **characterized in that** said set of auxiliary Diameter agent nodes are situated on the signaling path of the Diameter protocol.

9. A system according to claim 7, **characterized in that** it is adapted to implement the method of claims 1 to 6.

10. A Diameter Agent node adapted to progress a message requested by a Diameter client node, to a set of auxiliary Diameter agents nodes, acting as a Diameter Orchestration Agent node based on implemented policy enforcements and on the context of a Diameter protocol, to select the number of auxiliary Diameter Agent nodes intervening in said progressing and to further send said progressed requested message to a Diameter Server node, said progressed requested message being processed by the selected auxiliary Diameter Agent nodes taking into account policies and context of a Diameter protocol.

11. A Diameter agent node according to claim 10, **characterized in that** is situated in a Diameter protocol path between said Diameter Client node and said Diameter Server node.
